# EUROPÄISCHE PATENTSCHRIFT

(11) **EP 1 794 638 B1**
(45) Veröffentlichungstag und Bekanntmachung des Hinweises auf die Patenterteilung: **25.01.2012**
(21) Anmeldenummer: 05791101.8
(22) Anmeldetag: 22.09.2005
(51) Int. Cl.: G02B 21/24, G02B 7/16

(54) **MIKROSKOP-KONFIGURATIONSBESTIMMUNG**
DETERMINATION OF A MICROSCOPE CONFIGURATION
DÉTERMINATION DE CONFIGURATION DE MICROSCOPE

(30) Priorität: 30.09.2004 DE 102004048099
(43) Veröffentlichungstag der Anmeldung: 13.06.2007
(73) Patentinhaber: Carl Zeiss MicroImaging GmbH, 07745 Jena (DE)
(72) Erfinder: BECKER, Klaus, 37339 Breitenworbis (DE); MIKKELSEN, Hakon, 52457 Aldenhoven (DE); SCHNUELL, Peter, 37130 Gleichen (DE); SCHEPS, Alexander, 37139 Adelebsen (DE); KRAMER, Matthias, 37077 Göttingen (DE)
(74) Vertreter: Geyer, Fehners & Partner
(86) Internationale Anmeldenummer: PCT/EP2005/010283
(87) Internationale Veröffentlichungsnummer: WO 2006/037490

(56) Entgegenhaltungen:
- EP-A- 1 205 780
- DE-A1- 10 249 904
- US-A- 5 679 944
- ANONYMOUS: "DS2431 1024-Bit 1-Wire EEPROM" [Online] 19. Juli 2004 (2004-07-19), MAXIM INTEGRATED PRODUCTS , 120 SAN GABRIEL DRIVE, SUNNYVALE, CA, USA , XP002354594 Gefunden im Internet: URL:http://web.archive.org/web/20040719165 454/http://pdfserv.maxim-ic.com/en/ds/DS24 31.pdf> [gefunden am 2005-11-16] Seite 1
- PATENT ABSTRACTS OF JAPAN Bd. 2003, Nr. 06, 3. Juni 2003 (2003-06-03) -& JP 2003 043374 A (OLYMPUS OPTICAL CO LTD), 13. Februar 2003 (2003-02-13)

## Beschreibung

Moderne Mikroskope sind modular aufgebaut und ermöglichen dadurch viele verschiedene Gerätekonfigurationen. Die Geräte haben dabei regelmäßig wechselbare Komponenten, welche Einfluß auf die optischen Eigenschaften besitzen und deshalb für das anzuwendende Mikroskopieverfahren passend ausgewählt werden. Beispiele für solche Komponenten sind in rotierenden Revolvern gehaltene Objektive, durch andere Revolver oder Schieber bzw. separat ins Gerät einbaubare Strahlteiler oder Filter. Dabei können Komponenten sowohl durch einen motorischen Antrieb als auch manuell betätigt, gewechselt oder eingestellt werden. Insbesondere bei Komponenten, die manuell oder automatisiert austauschbar sind, ist die Identifikation der gerade im Strahlengang wirksamen Komponente von großer Bedeutung; dies sowohl, um sicherzustellen, daß für ein gewünschtes Mikroskopieverfahren die richtige Konfiguration eingestellt ist, als auch um bei der Auswertung während des Mikroskopierens entsprechend korrekte Daten zugrundelegen zu können.

Ein Beispiel für die Problematik, daß die Konfiguration eines Mikroskops im Einsatz zu berücksichtigen ist, findet sich in der US 5.703.714, bei der eine manuelle Eingabe der Bezeichnungen aller in einem Objektivrevolver vorgesehen Objektive möglich ist. Entsprechende Datenaigorithmen berücksichtigen dann die Parameter der Objektive beim weiteren Mikroskopieren. Die eingegebenen Objektivdaten entstammen dabei herkömmliche Typenschildern, wie sie schon seit sehr langer Zeit auf den Objektiven angebracht sind.

Es ist im Stand der Technik weiter bekannt, eine automatische Objektiverkennung durchzuführen. Die US 4.241.251 schlägt dazu vor, Objektive hinsichtlich der Gewindelänge des in den Objektivrevolver eingeschraubten Objektivstutzens unterschiedlich zu gestalten. Entsprechende, im Objektivrevolver vorgesehene Detektormittel erlauben es damit das aktuell in den Strahlengang geschwenkte Objektiv zu identifizieren und dadurch z. B. die eingestellten Vergrößerung zu ermitteln.

Die DE 102 45 170 A1 offenbart ebenfalls einen mechanischen Ansatz zur Objektividentifikation. An einem Wechselmagazin werden Streifenmarkierungen angebracht, mittels der die Stellung des Wechselmagazins ermittelt wird, indem die Streifenstrulktur optisch, elektrisch, Magnetisch oder mechanisch abgetastet wird. Dieses Wechselmagazin kann auch für einschwenkbare Filter verwendet werden.

Die DE 100 56 534 A1 sieht vor, am Objektiv einen drahtlosen Transponder, der beispielsweise in Form eines elektronischen Etikettes ausgebildet sein kann, zu befestigen sowie am Objektivrevolver eine zum Transponder passende Leseeinrichtung anzuordnen, die den Transponder des gerade eingeschwenkten Objektivs drahtlos abfragt. Im Transponder vorgegebene Codeinformation erlaubt nicht nur eine identifikation das Objektivtyps, sondern Zusätzlich auch den Zugriff auf das Objekt beschreibende Daten, die im Transponder abgelegt sind.

Die DE 102 49 904 A1 dehnt das Prinzip des elektronischen Etikettes auf die Detektion von anderen Baugruppen, beispielsweise optische Filter, aus. Die Verwendung von elektronischen Etiketten ist im Obrigen auch aus der DE 100 10 140 A1 im Zusammenhang mit der Identifikation von Objektträgern bekannt. Ein elektronisches Etikett wie es dazu beispielsweise verwendet werden könnte, ist in EP 0 715 760 B1 oder EP 0 647 943 A1 beschrieben. Aus der US 5 679 944 ist ein EPROM bekannt, der über Kontakte elektrisch kontaktierbar und mit Energie versorgbar ist.

Der Erfindung liegt die Aufgabe zugrunde, Mittel für eine einfache und möglichst universelle Komponentenerkennung bei einem Mikroskop zu schaffen.

Diese Aufgabe wird erfindungsgemäß gemäß Anspruch 1.

Es ist also vorgesehen, die Komponenten im Mikroskop über einen elektrisch kontaktierbaren Mikrochip zu identifizieren. Es ist damit möglich, die Anwesenheit einer oder mehrerer Komponenten im Gerät gleichzeitig automatisch festzustellen.

Die erfindungsgemäße leitungsgebundene Kontaktierung des Bausteins an der Optik-Komponente erlaubt den Einbau auch bei beengten räumlichen Verhältnissen auch für bereits entwickelte Bauelemente. Es muβ kein Platz für eine bei einem elektronischen Etikett erforderlichs Antenne vorgehalten werden. Auch können metallische Körper an oder nahe der Optik- oder Optikanbau-Komponente, wie beispielsweise die metallische Halterung eines Reflektormoduls oder Strahtteflers keine negativen Auswirkungen auf die Kommunikation mit dem Baustein haben. Die erfindungsgemäß vorgesehene leitungsgebundene Kontaktierung und Energieversorgung des Bausteins vermeidet also viele Probleme, die sich bei elektronischen Etiketten stellen und erlaubt darüber hinaus die Nachrüstung bei bereits existierenden bzw. entwickelten Optik-Komponenten.

Bei der Optik-Komponente handelt es sich im Sinne der Erfindung um ein optisches in den Strahlengang des Mikroskops einbringbares Bauteil, das auf die Funktion des Mikroskops Auswirkung hat. Ein Beispiel für solche Optik-Komponenten sind Objektive, Filterelemente, Strahlteiler o. ä. Unter einer Optikanbau-Komponente versteht die Erfindung ein Anbauteil, das an einem solchen Optik-Bauteil angebracht werden kann, beispielsweise eine Halterung, ein Überwurfring, eine Überwurfhülse, ein Gehäuse etc.

Bei dem Baustein handelt es sich vorzugsweise um einen Speicherbaustein. Zusätzlich oder alternativ kann auch ein Mikrochip mit mehr als zwei Elektroden verwendet wenden, der beispielsweise zur Zeitmessung. Temperaturmessung, pH-Wert-Messung, Strommessung, elektrische Spannungsmessung oder anderer physikalischer Größen dienen kann. Auch kann **z.** B. eine Temperaturregelung durch Heizen erfolgen. Wird nachfolgend von einem Speicherbaustein gesprochen, so ist dies lediglich exemplarisch gemeint.

Um die Konfiguration des Mikroskops bei der Messung optimal berücksichtigen zu können, ist es vorteilhalt, wenn die Optik-Komponente betriebszustandabhängig im Mikroskop aktivierbar ist. Vorteilhafterweise wird die elektrische Kontaktierung derjenigen Optik-Komponenten vorgenommen, die im Mikroskop aktiviert sind, beispielsweise im Strahlengang liegen.

Natürlich ist es auch möglich, die Chips erfidungsgemäßer Optik-Komponenten manuell mittels eines Lesestiftes beim Einbau ins Mikroskop auszulesen, so daß in der Steuereinheit die Identifikation der gerade eingebauten Komponente erfolgen kann. Zur Komponentenerkennung bei manuell einzubauenden Komponenten kann man einen Lesestift Verwenden, der an die Kontaktfelder der erfindungsgemäßen Optik-Komponente angesetzt wird, bevor oder nachdem die Optik-Komponente um Mikroskop eingebaut wird/wurde. Ein Beispiel für einen solchen Lesestift stellt beispielsweise das Lese/Sohreib-Interface VGL-S-RS232 der Firma Megatron Elektronik AG & Co., Hermann-Oberth-Straße 7, 85640 Putzbrunn, Deutschland, dar.

Darüber hinaus können für die Komponenten im Speicherbaustein neben der Komponentenidentifikation dienenden Daten auch Komponenteneigenchaften beschreibende Daten abgespeichert und abrufbar sein. So können beispielsweise Seriennummern, spezielle Meßprotokolle wie optische Spektren, Abweichungen von Spezifikationsvorgaben etc. abgelegt sein, die Aussagen über die Optik-Komponente erlauben.

Zweckmäßigerweise ist der elektronische Baustein möglich klein ausgeführt. Ein Beispiel für einen Baustein ist der unter der Bezeichnung "1-wire" vertriebene Baustein von Maxim, USA. Er wird über die zwei Kontaktfelder angeschlossen und sowohl mit Energie versorgt als auch ausgelesen. Ein Beispiel für das bei dem Auslesen verwendet Protokoll ist der Standard R8232, RS485, RS422 oder USB.

Bei kleinen Bausteinen ist es zweckmäßig, eine Platine zu verwenden, die zum einen den Baustein trägt und zum anderen die Kontaktfelder bereitstellt

Für die Funktion des Bausteines sind mindestens zwei Kontaktfelder nötig. Sie können entweder parallel oder koaxial angeordnet werden. In einer besonders vorteilhaften Ausgestaltung weist die Platine sowohl parallel liegende Kontaktfelder als auch koaxiale Kontaktfelder auf. z. B. auf gegenüberliegenden Seiten. Eine solche Platine mit einem Speicherbaustein kann universell für verschiedenste Komponenten verwendet werden. Eine Größe mit einem Durchmesser einer kreisförmigen Platine von etwa 5 mm ist erreichbar, wodurch der Speicherbaustein mit Platine in einem einfachen Sackloch an bereits bestehenden Komponenten nachgerüstet werden kann.

Solche Sacklochbohrungen sind jedoch an Objektiven oft nicht möglich. Hier bietet es sich an. einen Ring zum verwenden, der den elektronischen Spelcherbaustein trägt und an einer Hülle des Objektives befestigt ist.

Besonders platzsparend kann der elektronische Baustein angebracht werden, wenn eines der zwei Kontaktfelder durch ein (ohnehin vorhandenes) elektrisch leitendes Gehäuseelement der Komponente gebildet ist.

Zur elektrisch-mechanischen Kontaktierung des Bausteins kommen je nach Ausführung der Kontakfelder eine federnd belastete Kontaktspitze in Kombination mit einem federnd belasteten Zylinderkontakt, federnd belastete Kontaktspitzen oder Schleifkontakte in paralleler Anordnung sowie Lötkontakte in Frage.

In einer günstigen Ausführung zur Komponentendetektion ist erfindungsbemäβ ein Mikroskopobjektiv mit einer Optikanbau-komponenta vorgesehen, die als ein an einer Objektivhülle befestigbarer Ring ausgebildet ist wobei eines der beiden Kontaktfelder durch die Objektivhülle gebildet ist und das andere der beiden Kontaktfelder als ringförmiger Leiterstreifen ausgeführt ist. Ein solcher ringförmiger Leiterstreifen kann auf einfache Art und Weise kontaktiert werden, wobei bestehende Objektivrevolverkonstruktionen im wesentlichen beibehalten können und nur geringfügig modifiziert werden müssen.

Prinzipleit kann mit den erfindungsmaßen Optik-Komponenten eine Identifikation bzw. eine Datengewinnung für alle in einem Mikroskop vorhandenen Optikbauteile erfolgen, unabhängig davon, ob die Optikbauteile für das Mikroskop garade aktiv sind oder nicht. Detektiert man alle in einem Mikroskop theorelisch aktivierbaren Optikbauteile, ist es jedoch zweckmäßig, einen. Detektionsmechanismus vorzusehen, der feststellt, welche Komponenten im Strahlengang gerade aktiv sind. Hier, sind die im Stand der Technik erwähnten. Ansätze brauchbar.

In einer günstigen Ausgestaltung werden nur diejenigen Optik-Bauteile hinsichtlich ihrer elektronischen Bausteine ausgelesen, die im Strahlengang aktiv sind oder demnächst aktiviert werdet. Es ist dafür zweckmäßig, einen Kontaktierungsmechanismus für ein Mikroskops mit Komponentenerkennung vorzusehen, wobei der Kontaktierungsmechanismus zum Einbau in ein Mikroskops und zur Kontaktierung der genannten erfindungsgemäβen Optik- oder Optikanbau-Komponente ausgebildet ist und im Mikroskops in den Strahlengang gebrachte oder bringbar Komponenten kontaktiert.

Insbesondere bei einem Wechssimechanismus Kann mitunter eine Situation auftreten, bei der das in den Strahlengang geschwenkte oder im Strahlengang aktivierte Element nicht kontaktiert werden kann, z.B. aus Platz-, Präzislons- oder Stabilitätsgründen. In solchen Fällen ist es zweckmäßig, eine Kontaktierung der Optik-Komponente vorzunehmen, wenn sie noch nicht in den Strahlengang eingebracht ist. Zusammen mit einer Lageerkennung für die Wechseleinrichtung kann dann eine Steuereinrichtung ermitteln. Welche Optik-Kamponente im Strahlengang liegt.

Ähnlich kann man vorgehen, wenn es interessant ist, vor dem Einsatz eines Mikroskops alte verfügbaren Optik-Komponenten zu kennen. Schaltet man eine Wediseleinrichtung in alle möglichen Wechseleinrichtung und ermittelt jeweils durch Kontaktieren die erforderlichen Daten über die Optik-Bauteile liefert eine solche "Referenzfahrt" die erforderlichen Daten über alle verfügbaren Bauteile.

Der Kontaktierungsmechanismus führt vorzugsweise eine aktive Kohtaktierung der Optik-Komponente durch, d.h. er verfügt über einen entsprechenden Antrieb, der den kontakt Natürlich ist auch eine passive Kontaktierung, beispielsweise in Form von Federkontakten möglich.

Die Zahl der Kontaktierungsmechanismen wird üblicherweise der Zahl an Modifikationsstallen entsprechen, an denen der Strahlengang des Mikroskops durch wechselbare Elemente modifiziert werden kann. Die Zahl an erfindungsgemäßen Optik-Komponenten liegt meist höher und entspricht in der Regel der Anzahl an einbaubaren Optik-Bauteilen.

Mittels des Kontaktierungsmechanismus werden die Daten vom elektronischen Baustein zu einem Steuergerät des Mikroskops überführt, das einen Lese- und eventueil zusätzlich auch Schreib-Vorgang ausführen kann. Der elektronische Bausteln kann einen oder mehrere Datenbereiche beinhalten, die bei Bedarf paßwortgeschützt werden können. Auf diese Weise können Herstellerdaten geschützt gesichert werden, so daβ sie z.B. nur für Servicemitarbeiter des Herstellers abrufbar sind. Der elektronische Speicherbaustein weist vorzugsweise einen guten Schutz gegen elektrostatische Spannungen und Ladungen auf. Dies ist insbesondere bei manuell wechselbaren Komponenten vorteilhaft, da dann der Wechsel ohne Schutzmaßnahmen vor elektrostatischen Ladungen ausgeführt werden kann. Vorteilhafterweise hält der elektronische Speicherbaustein gespeicherte Daten für mindestens 10 bis 20 Jahre vor, such wenn er nicht mit Spannung versorgt wird, und dies bei üblichen Temperaturen zwischen 0 und 85° Celsius.

Die eingangs genannte Aufgabe wird weiter durch ein Mikroskop gemäß Anspruch 6 gelöst. Die Steuereinheit ist mit dem Kontaktierungsmechanismus über eine Kommunikationsverbindung verbunden und über ermittelt Abfrage der Bausteine Daten über die Konfiguration des Mikroskops Obschon die Kontaktierung des Bausteins im Rahmen der vorliegenden. Erfindung leitungsgebunden erfolgt, um die gewünschte geringe Baugröße realisieren zu können, ist es dennoch möglich, die Kommunikationsverbindung zwischen Steuereinheit und Kontaktierungsmechansmus auch per Funk zu realisieren. Dadurch können mitunter störende Kabelverbindungen im Mikroskop eingespart werden.

Zur Erkennung und Datengewinnung für das in den Strahlengang eingeschwenkte Objektiv ist eine Weiterbildung des Mikroskops zweckmäßig, das einen Objektivrevolver mit einem Objektivteller, in den an Objektivaugen Objektive einsetzbar sind, aufweist, wobei der Kontäktierungsmechianisimus für jedes Objekitvauge einen Stößel, weicher einen der zwei Kontaktfelder und einen der beiden Anschlüsse des Bausteins kontaktiert, umfaßt.

Es ist günstigerweise für jedes Objektiv ein Stößel vorgesehen, der beim Einsetzen des Objektivs in das Objektivauge den elektrischen Kontakt herstellt. Verwendet man für das Objektiv die bereits geschilderte Form eines Überwurfringes oder einer Oberwurfhülse; ist vorteiihaferweise die Drehstellung des Mikroskops nach dem Einbau am Objektivteller ohne Belang, da der Stößel dann lediglich auf dem ringförmigen Leiterstreifen aufsetzen muß. Der Kontaktierungsmechanismus kontaktiert zwackmäßigerweise nur denjenigen Stößel, der dem in den Strahlengang geschwenkten Objektiv zugeordnet ist, er weist also einen, biespielsweise als Schleif- oder Federkontakt ausgebildeten Anschluß auf, der am Objektivrevolver so angeordnet ist, daß er am Stößel des in den Strahlengang geschwenkten Objektivs anliegt.

Im Sinne einer möglichst kompakten Bauweise, kann der andere Anschluß das Speicherbausteins über einen die Objektivhülle kontaktierenden Schleifkontakt angeschlossen werden, wenn die Öptikarbau-Komponente diesen Anschluß des Bausteins leitend mit der (leftenden) Objektivhülle verbindet

Die eingangs genannte Aufgabe wird erfindungsgemäß weiter durch ein Verfahren zur Komponentenerkennung gemäß Anspruch 9 gelöst. Der Baustein wird elektrisch kontaktiert und ausgelesen und aus den dabei ausgelesenen Daten werden die im Mikroskop aktuell im strahlengang aktiven Komponenten ermittelt. Dieses Verfahren kann, wie bereits erwähnt, besonders einfach dann ausgeführt werden, wenn die Kontaktierung lediglich für diejenigen Optikbauteile vorgenommen wird, die am Mikroskop aktiviert sind, d. h. im Strahlengang liegen. Die information über die ermittelten Komponenten kann man beim Mikroskopieren verwerten, insbesondere im Korrekturverfahren.

Die Erfindung ermöglicht auf einfache Art und Weise auch bestehende Mikroskope zu einer Komponentenerkennungsfählgkeit aufzurüsten,

Die erfindungsgemäßen Lösungen der eingangs genannten Aufgabe erlauben durch die elektrische Kontaktierung nicht nur eine besonders geringe Baugröße, sondern ein jederzeitiges Beschreiben der Mikrochips. Durch die efindungsgemäß möglich gewordene Komponentenerkennung erhält ein Bediener bessere Übersicht über die zur aktuellen Zeit eingesetzten optischen Bauteile im Mikroskop. Dadurch können fehlerhafte Geräteeinstellungen oder auch fehlerhafte Mikroskopbilder vermieden werden. Gleichzeitig wird eine Fernbedienung der Geräte effizienter und auch eine Diagnose von Mikroskopen wird effizienter und aussagekräftiger. Schließlich kann die Herstellung wie auch die kundenseitige Logistik durch die erfindungsgemäße Komponentenerkennung stärker automatisiert werden, insbesondere durch die Zuverfügungstellen von Seriennummern, Artikelnummern und Auftragsnummer im Mikrochip und dies ermöglicht die Steuerung der Fertigung wie auch den Service klarer zu strukturieren.

Die Erfindung wird nachfolgend unter Bezugnahme auf die Zeichnungen beispielhalber noch näher erläutert. In den Zeichnungen zeigt:
- Fig. 1: eine schematische Darstellung eines unterschiedlich konfigurierbaren, optischen Mikroskops,
- Fig. 2 u. 3: perspektivische Darstellung eines Moduls zur Komponentenerkennung
- Fig. 4 bis 6: perspektivische Darstellungen unterschiedlicher optischer Komponenten jeweils mit dem Modul der Figuren 2 und 3,
- Fig. 7 u. 8: perspektivische Darstellungen eines Kontaktierungsmechanismus für das Modul der Figuren 2 und 3,
- Fig. 9: eine Seitenansicht des Kontaktierungsmechanismus der Figuren 7 und 8
- Fig. 10 u. 11: Schnitt- bzw. Schnitt-Detaildarstellungen des Mechanismus der Figuren 7 bis 9,
- Fig. 12 u. 13: perspektivische Darstellungen einer Überwurfhülse für ein Mikroskop mit einem Modul gemäß Figuren 2 und 3,
- Fig. 14 bis 16: Draufsichten bzw. Seiten- oder Schnittansichten eines Überwurfrings bzw. einer Überwurfhülse ähnlich der in Figuren 12 und 13 dargestellten,
- Fig. 17: eine Detaildarstellung des in Figur 16 gezeigten Bauteils,
- Fig. 18: eine perspektivische Darstellung eines Objektivrevolvers für das Mikroskop der Figur 1,
- Fig. 19: eine perspektivische Darstellung eines Objektivrevolvers in der Figur 18 verwendeten Objektivtellers und
- Fig. 20: eine perspektivische Darstellung des Objektivrevolvers der Figur 8 mit eingesetztem Objektiv.

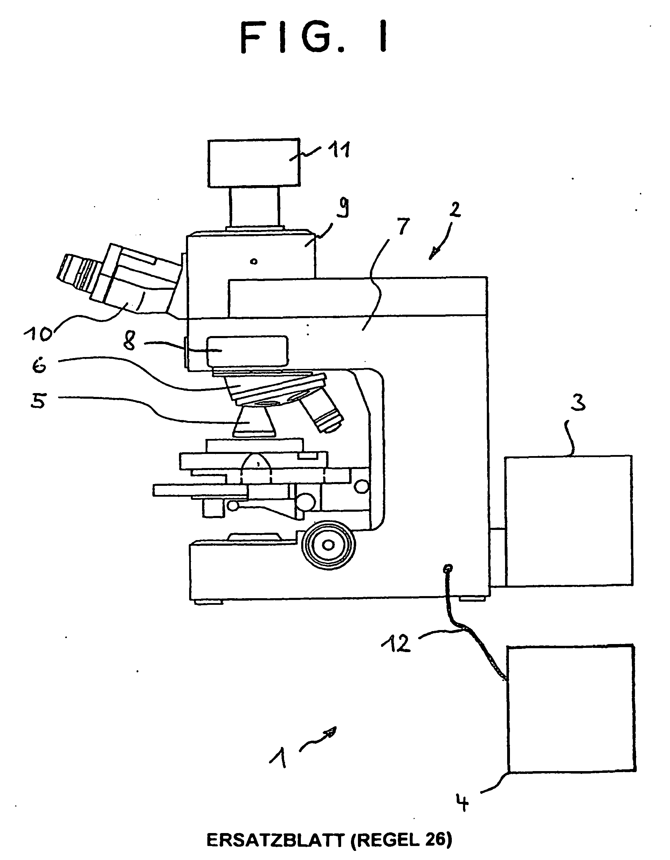

Figur 1 zeigt ein Mikroskopsystem 1, das in unterschiedlichen Konfigurationen eingerichtet und verwendet werden kann. Die Umkonfigurierung des Mikroskopsystems 1 kann dabei sowohl automatisch, beispielsweise durch motorisch angetriebenen Komponentenwechsel, als auch manuell durch Eingriff eines Bedieners erfolgen. Das Mikroskopsystem 1 weist im einzelnen ein optisches Mikroskop 2 auf, an das eine Lichtquelleneinheit 3 angebaut ist und das über eine Steuereinheit 4, die geeignete Ein-/Ausgabemittel umfaßt, im Betrieb gesteuert wird. Die Ein-/Ausgabemittel können beispielsweise eine Tastatur, eine besondere Eingabeeinheit, einen Bildschirm, Datenträger, Eingabesysteme (Diskettenlaufwerk, CD-Laufwerk o. ä.) oder auch eine Netzwerkanbindung aufweisen.

Das Mikroskop 2 bildet über ein Objektiv 6 ein auf dem Mikroskoptisch angeordnetes Objekt ab. Das Objektiv 5 ist an einem im Ausführungsbeispiel motorisch angetriebenen Objektivrevolver 6 angebracht, der ein Einschwenken verschiedener Objektive ermöglicht. An einem Stativ 7 des Mikroskops 2 ist eine Wechseleinheit 8 vorgesehen, an der verschiedene optische Komponenten in das Mikroskop 2 eingesetzt werden können. Es kann sich dabei beispielsweise um einen Reflektorrevolver, einen Filter oder Strahlteiler für übliche Kontrastierungsverfahren (z. B. DIC, TIC etc.) handeln. Ober einen Tubus 9 mit angebautem Okular 10 bzw. angeschlossener Kamera 11 wird das Bild dann beobachtet. Der detaillierte Aufbau des Mikroskops 2 ist für die nachfolgende Beschreibung nur insoweit relevant, als es unterschiedlich konfiguriert werden kann, indem ein Wechsel bzw. ein Ein- bzw. Ausbau optisch wirksamer Komponenten vorgenommen wird.

Das Mikroskop 2 ist über eine Datenleitung 12 mit der bereits erwähnten Steuereinheit 4 verbunden, die Steuerinformationen über den Betrieb des Mikroskops ausliest bzw. in das Mikroskop 2 einspeist. Der Automatisierungsgrad kann dabei je nach Ausführungsvariante unterschiedlich gestaltet werden. Der Eingriff der Steuereinheit 4 kann von einer einfachen Überprüfung der Funktionsweise des Mikroskops, über einen Wamen vor ungünstigen Konfigurationen, eine Mitwirkung bei der Bildgewinnung (beispielsweise bei Laserscanningbetrieb) bis hin zu einem voll automatischen Mikroskopbetrieb reichen.

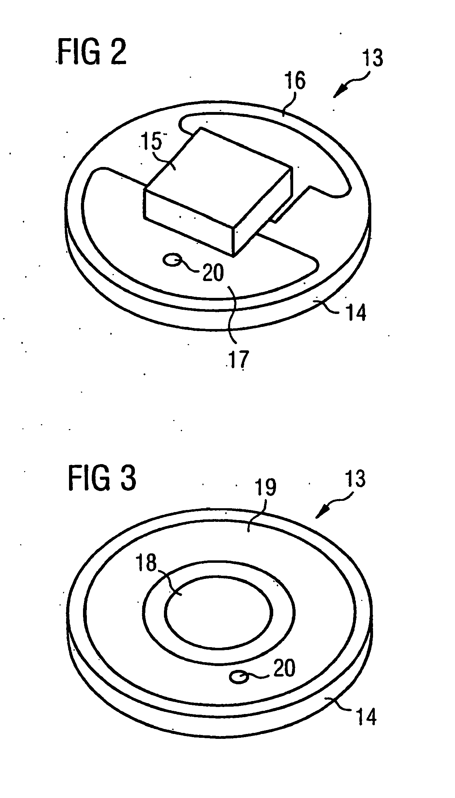

Figur 2 zeigt ein Modul 13, das für die Erkennung von in das Mikroskopsystem 2 eingebauten optischen Bauteilen verwendet wird. Das Modul 13 weist eine Platine 14 auf, auf der ein Speicherbaustein Chip 15 angebracht und mit zwei parallelen Kontaktfeldem 16 und 17 auf der Platine 14 verbunden ist. Die Kontaktfelder 16 und 17 erlauben eine Kontaktierung des Chips 15, der für eine Zweipunktkontaktierung ausgebildet ist. Die Kontaktfelder 16 und 17 dienen zum einen zur Energieversorgung des Chips 15 und zum anderen zur Datenkommunikation mit dem Chip. Die Datenkommunikation findet beispielsweise nach dem Standard USB statt. Auf der Rückseite der Platine 14, die in Figur 3 zu sehen ist, befinden sich ein Mittelkontakt 18 sowie ein Ringkontakt 19, die über geeignete Durchkontaktierung mit den Kontaktfeldem 16 und 17 verbunden sind. In den Figuren 2 und 3 ist die Durchkontaktierung 20 für den Ringkontakt deutlich zu sehen. Die Durchkontaktierung für den Mittelkontakt ist in den Zeichnungen nicht dargestellt.

Der Chip 15 des Moduls 13 kann also entweder über eine parallele Kontaktierung auf der Vorderseite oder durch eine koaxiale Kontaktierung auf der Rückseite der Platine 14 mit Energie versorgt und ausgelesen bzw. beschrieben werden.

Das Modul 13 ist generell einsetzbar und kann an nahezu beliebigen, optischen Bauteilen des Mikroskopsystems 1 zur Komponentenerkennung vorgesehen werden. Durch die Möglichkeit einer parallelen wie auch koaxialen Anschlusses ist ein flexibler Einsatz erreicht; möchte man darauf verzichten, kann man natürlich eine der beiden Kontaktarten weglassen.

Das Modul 13 wird über die Kontakte, d. h. entweder die Kontaktfelder 16 und 17 oder den Mittelkontakt 18 mit Ringkontakt 19 mit Energie versorgt und zum Datenaustausch mit der Steuereinheit 4 verbunden. Die Steuereinheit 4 kann somit erkennen, ob ein Modul 13 im Mikroskopsystem 1 vorhanden ist. Aufgrund einer bekannten Zuordnung des Moduls 13 zu einem optischen Bauteil des Mikroskops 1 ist damit eine Komponentenerkennung erreicht.

Alternativ oder zusätzlich kann im Chip 15 neben einer einfachen Seriennummer, die über weitere externe informationsquetien einem optischen Bauteil zugeordnet werden muß, auch das optische Bauteil beschreibende information vorgehalten werden, beispielsweise Bauteilname, Produktnummer, Spezifikationsvorgabewerte, Seriennummer, spezielle Meßprotokolle wie optische Spektren, Abweichungen von Spezifikationswerten usw., bis hin zu für Kompensationen, beispielsweise Temperaturtcompensationen erforderliche Kennlinien. Die im Chip 15 gespeicherten Daten werden über die erläuterten Kontakte elektrisch gelesen. Wie bereits erwähnt, kann der Chip 15 auch weitere Funktionen leisten. Auch kann ein Chip mit weiteren Funktionen auch parallel geschaltet zusätzlich vorgesehen werden.

Das Einschreiben von Daten erfolgt zweckmäßigerweise beim Hersteller während des Einbaus des Moduls 13 an ein optisches Bauteil, kann unter gewissen Umständen aber auch vor Ort erfolgen, wenn beispielsweise Korrekturparameter ermittelt und im Chip 15 abgelegt werden.

Die Steuereinheit 4 liest die Daten aller ihr zugänglicher Module 13 beispielsweise zyklisch auf ein Stellkommando hin aus. Ein Auslesen ist auch möglich, wenn die Steuereinheit 4 eine manuelle Veränderung des Mikroskopsystems 1 erkennt oder angezeigt bekommt. Durch diese Informationen ergibt sich für die Steuereinheit 4 ein konkretes Bild der aktuellen Gerätekonflguration und der aktiven Komponenten. Sie kann somit einen Bediener warnen, wenn eine ungünstige Konfiguration vorliegt. Diesbezüglich wird vollumfänglich auf die Offenbarung der US 5.703.714 verwiesen.

Zusätzlich kann die Steuereinheit 4 nach erfolgter Komponentenerkennung den aktuellen Strahlengang des Mikroskops 2 darstellen, beispielsweise auf einem Monitor. Durch die Zuordnung individueller, im Chip 15 abgelegter Meßparameter der das Modul 13 tragenden optischen Einheit kann die Meßgenauigkeit gesteigert werden. Vorzugsweise wird die exakte Abgleichlänge eines Objektivs nunmehr in der Steuereinheit 4 berücksichtigt. Gleiches gilt für die sogenannte Point Spread Function eines Objektivs. Die bisherige Speicherung dieser Werte in der Steuereinheit 4 kann entfallen, da die Daten nunmehr im Chip 15 und damit direkt am Objektiv verfügbar sind.

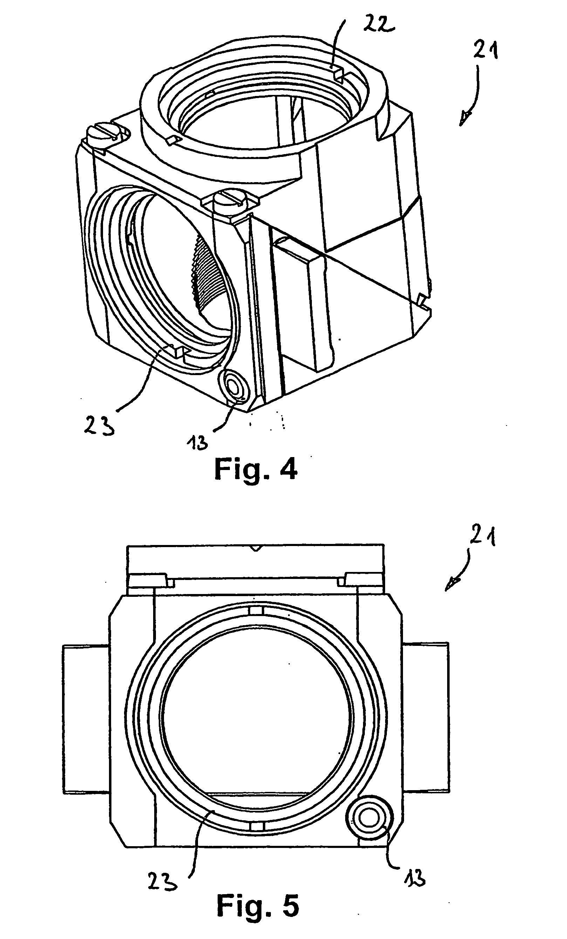

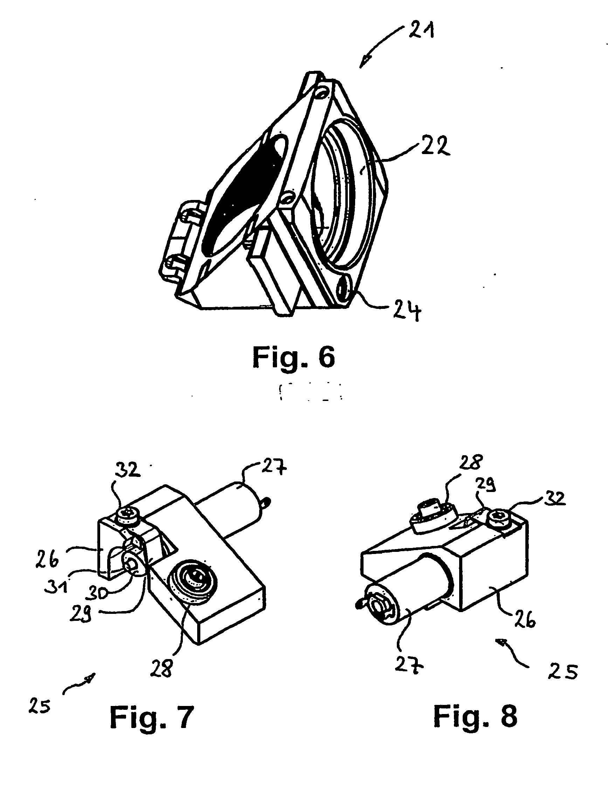

Figur 4 zeigt den Einsatz des Moduls 13 an einem Reflektormodul 21. das über Bajonett- oder Schraubverbindungen 22, 23 angeschlossen weitere Komponenten trägt und in den Strahlengang des Mikroskops 1 eingebracht werden kann. An einer Seite des Reflektormoduls 21 ist ein Sackloch vorgesehen, in das das Modul 13 eingeklebt ist. In der Darstellung der Figuren 4 und 5 ist zu sehen, daß dabei die Rückseite der Platine 14 mit dem Mittelkontakt 18 sowie dem Ringkontakt 19 zugänglich ist. Figur 6 zeigt eine alternative Ausgestaltung eines Reflektormoduls 21.

Zur Komponentenerkennung wird bei der Ausführungsform gemäß Figuren 4 bis 6 vor dem Einbau des Reflektormoduls 21 in den Strahlengang des Mikroskops 2 mittels eines separaten Lesestiftes, wie er in der Vorteilsschilderung bereits erwähnt wurde, kontaktiert. Die Steuereinheit 4 erhält so vor oder nach dem Einbau des Reflektormoduls 21 in das Mikroskop 2 Zugang zum Chip 15 des Moduls 13 und damit zu den das Reflektormodul 21 beschreibenden oder zumindest identifizierenden Daten.

Alternativ oder zusätzlich zu diesem manuell unterstützten Einlesen der Daten des Chips 15 bei der Ausrüstung eines Mikroskopsystems 2 ist auch eine vollautomatische Kontaktierung optischer Komponenten möglich. Dies bietet sich beispielsweise bei Optik-Bauteilen an, die während des Betriebes häufig mit einem Wechselmechanismus ausgetauscht werden, wie er beispielsweise in Form der Wechseleinheit 8 beim Mikroskop 2 vorliegt. Ein Beispiel dafür sind über einen Revolver austauschbare Reflektormodule.

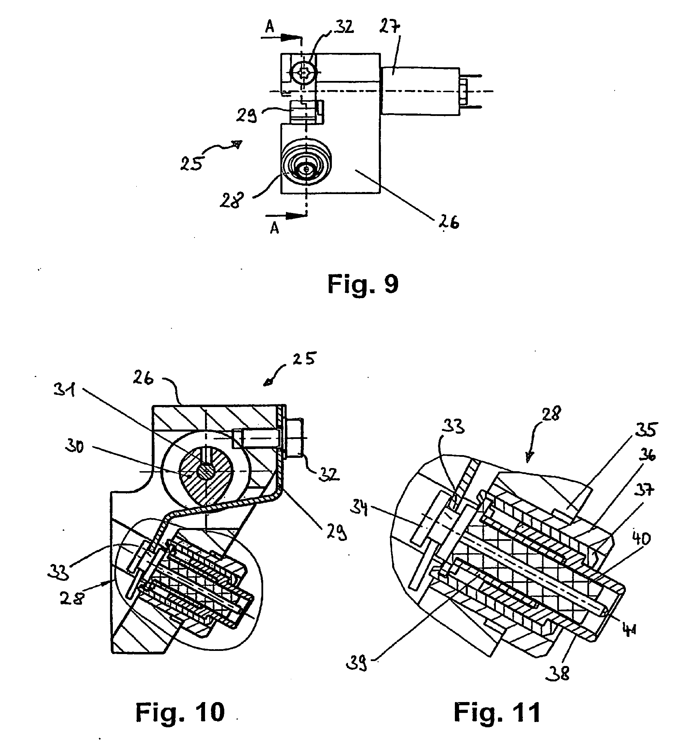

Der in den Figuren 7 und 8 gezeigte Kontaktierungstaster 25 weist ein Gehäuse 26 auf, an dem ein Elektromotor 27 angebracht ist, der eine Kontaktstifteinheit 28 bewegt. Diese Kontaktstifteinheit 28 sitzt am Ende eines Armes 29, der von einem Nocken 30, welcher auf einer vom Elektromotor 27 angetriebenen Welle 31 sitzt, betätigt wird. Wie der Seitenansicht der Figur 9 sowie der Schnittansicht der Figur 10, die entlang der Linie A-A der Figuren 9 gewonnen wurde, zu entnehmen, fixiert eine Verschraubung 32 den Arm 29, so daß dieser als einarmiger Hebel vom Nocken 30 angetrieben wird. An seinem freien Ende weist der Arm 29 eine Öffnung 33 auf, in der ein Knopf 34 der Kontaktstifteinheit 28 sitzt. Die Verschwenkung des Nockens 30 verschiebt den Knopf 34 entlang einer Längsachse der Kontaktstifteinheit 28.

Die in Figur 11 als Ausriß aus Figur 10 vergrößert dargestellte Kontaktstifteinheit 28 weist eine in einer Wandung 35 des Gehäuses 26 sitzende Hülse 36 auf, in der ein Einsatz 37 längsverschieblich angeordnet ist. Die am Knopf 34 ansetzende Bewegung des Armes 29 verschiebt den Einsatz 37 in Längsrichtung in der Hülse 36. Im Einsatz 37 ist ein Koaxialkontakt 38 von einer Feder 39 nach außen vom Knopf 34 weggespannt. Da der Knopf 34 mit dem Einsatz 37 verbunden ist, bewegt der Arm 29 über den Knopf 34 auch den Koaxialkontakt 38. Gleiches gilt für einen direkt am Knopf 34 angebrachten über ein Isolierstück 40 vom Koaxialkontakt elektrisch isolierten Mittelkontakt 41.

Der Kontaktierungstaster 25 bewirkt also über ein Verschwenken des Nockens 30 eine Längsverschiebung des Einsatzes 37. Liegt dabei der Koaxialkontakt 38 an einem Ringkontakt fest, wird der Mittelkontakt 41 gegenüber dem Koaxialkontakt 38 verschoben, da der Koaxialkontakt 38 gegen die Feder 39 in den Einsatz 37 hineinbewegt wird. Dies erfolgt solange, bis sowohl Koaxialkontakt 38 als auch Mittelkontakt 41 an den entsprechenden Kontakten der Platine 14 anliegen.

Der Kontaktierungstaster 25 ist im Mikroskop 1 vorzugsweise an all denjenigen Stellen eingebaut, an denen eine Wechseleinheit für in den Strahlengang einzubringende Bauteile vorgesehen ist. Die Steuereinheit 4 kommuniziert mit dem Kontaktierungstaster 25 über die Datenleitung 12 sowie möglicherweise zusätzlich oder alternativ über Funkverbindungen. Die Steuereinheit 4 kann damit zu jedem Zeitpunkt durch Aktivieren des Kontaktierungstasters 25 bzw. im Falle mehrerer Taster über sequentielle oder gleichzeitige Betätigung und Abfragen aller Taster Aussagen über die Konfiguration des Mikroskopsystems 1 gewinnen, indem der bzw. die Kontaktierungstaster 25 zum Auslesen der entsprechenden Module 13 betätigt werden.

In diesem Konzept ist es darüber hinaus vorteilhaft zusätzliche Mittel vorzusehen, welche die Aktivität einer Wechseleinheit oder überhaupt das Vorhandensein eines optischen Bauteils erkennen. Ein mögliche Beispiels hierfür stellt eine magnetische Detektion mittels Hallsensoren dar. Beispielsweise kann man in einem Deckel des Reflektormoduls 21 einen Permanentmagneten vorsehen, der über am Mikroskop 2 angebrachte Magnetfeldsensoren, beispielsweise einen Hallsensor ausgelesen wird. Mit diesem Sensorsystem, das natürlich auch andersartige Sensoren verwenden kann, kann erkannt werden, ob der Deckel des Reflektormoduls offen oder geschlossen ist. Dadurch weiß die Steuereinheit 4, ob der Deckel des Reflektormoduls 21 offen oder geschlossen ist, d. h. ob ein Reflektormodul gerade gewechselt wird oder nicht. Falls ein Reflektorrevolver vorgesehen ist, wird dieser zweckmäßigerweise einmal rotiert, um alle Reflektormodule elektronisch auszulesen, d. h. ob dort Komponenten angebracht sind, die gegebenenfalls ausgelesen werden müssen. Ein solches Vorgehen ist besonders immer dann vorteilhaft, wenn bei einem Wechselmechaniums, z. B. einem Revolver, nicht das aktive Element gemessen werden kann (z.B. aus Baugrößegründen) oder soll (z.B. um die mögliche Konfiguration zuvor wissen zu können). Dann kann in einem vorherigen Durchlauf die aktuelle Bestückung des Wechselmechanismus ermittelt, abgespeichert und zusammen mit einer Stellungserkennung berücksichtigt werden.

Die hohe Speicherkapazität, die der Chip 15 ermöglicht, ist von Vorteil, da detaillierte Aussagen über die Bauteile, insbesondere die optischen Elemente im Reflektormodul möglich sind.

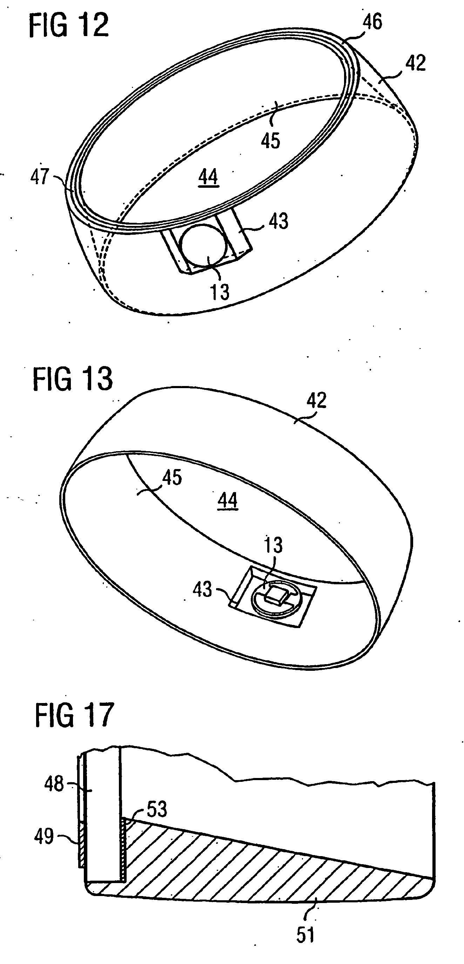

Die Figuren 12 und 13 zeigen alternative Anordnungsmöglichkeiten für das Modul 13 in Form von Ringhülsen 42, die als Überwürfe über Objektive geschoben werden können. In Figur 12 ist ein transparenter Kunststoffring gezeigt, der am Objektivstutzen befestigt wird (z. B. mittels Kleben) und eine Ausnehmung 43 zur Aufnahme des Moduls 13 aufweist. Die transparente Bauweise der Ringhülse 42 vermeidet, daß etwaige Beschriftungen am Objektiv verdeckt werden, wenn die Ringhülse 42 mit ihrem Objektivraum 44 über das Objektiv geschoben ist. Das Modul 13 ist mit seinen zwei Kontakten mit zwei elektrischen Anschlüssen an der Ringhülse 42 verbunden. Ein Anschluß ist durch die Innenfläche 45 der Ringhülse gebildet, die elektrische Kontaktfelder aufweist bzw. einen elektrischen Kontakt zu einer (nicht gezeigten) Objektivhülle herstellt. Der zweite Kontakt ist ein an der Oberkante 46 der Ringhülse 42 vorgesehner ringförmiger Leiterbahn-Streifen 47, der bei eingebautem Objektiv an der Oberseite kontaktiert wird. Eine mögliche Ausführungsform dafür wird noch erläutert.

Die Leiterbahn 47 ist kreisförmig, d. h. als Ring ausgeführt, der das Objektiv mit übergeworfener Ringhülse 42 in der Regel durch eine Drehbewegung am Objektivrevolver befestigt wird. Bei einer Bajonett-Befestigung wäre eine andere Lösung möglich, d. h. die Leiterbahn 47 müßte nicht mehr kreisförmig umlaufen.

Figur 13 zeigt eine ähnliche Bauweise der Ringhülse 42, die hier jedoch nicht transparent ausgebildet ist. Figur 13 zeigt gut die Lage des Moduls 13 in der Ausnehmung 43 der Ringhülse. Die nicht transparente Bauweise der Figur 13 hat den Vorteil, daß eine Klebung zwischen Objektiv und Ringhülse 42 einfacher ausgeführt werden können, da eventuelle Luftblasen nicht sichtbar sind. Dadurch wird die Montage einfacher und preisgünstiger.

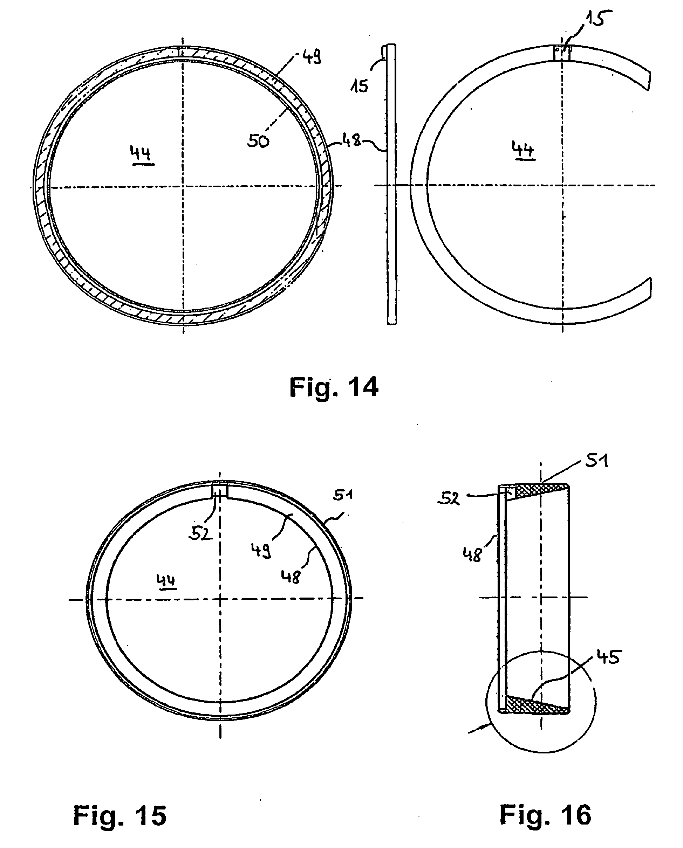

Figur 14 zeigt eine weitere mögliche Bauweise für eine Optikanbau-Komponente, die wiederum zum Anbau an ein Objektiv gedacht ist. Im Gegensatz zur Ringhülse 42 der Figuren 12 und 13 ist hier eine Ringplatine 48 mit zwei Kontaktringen in Form eines Außenkontaktes 49 und eines Innenkontaktes 50 vorgesehen. Letzterer ist z. B. zur Kontaktierung eines elektrisch leitenden in dem Objektivinnenraum 44 vorgesehenen Mikroskopgehäuse gedacht. Die Ringplatine 48 trägt auf einer Seite den Chip 15, der mit dem Außenkontakt 49 bzw. dem Innenkontakt 50 elektrisch leitend verbunden ist Sie ist somit ein Beispiel für eine Bauweise, bei der nicht das Modul 13 der Figuren 2 und 3, sondern lediglich der Chip 15 verwendet wird. Die Ringplatine 48 wird an das Objektiv angeklebt. Der Anschluß erfolgt wiederum über das metallisch leitende Gehäuse und den Außenkontakt 49.

Ist kein metallisch leitendes Gehäuse vorhanden, kann die Kontaktierung von außen direkt am Innenkontakt 50 und Außenkontakt 49 vorgenommen werden. Dies hat den Vorteil einer doppelten Isolierung, da das elektrische Potential eines Objektivgehäuses nicht angetastet wird. Entsprechende EMV- bzw. Elektrostatikschutzvorteile sind damit verbunden.

Die Ringplatine 48 ermöglicht, wie die Figuren 15 und 16 zeigen, in einer zweiteiligen Bauweise auch die Realisierung einer Ringhülse ähnlich der in den Figuren 12 und 13 gezeigten Variante. Hierzu wird eine Hülse 51 verwendet, in die die Ringplatine 48 eingelegt ist. Eine entsprechende Ausparung 52 bietet Platz für den Chip 15. Die Hülse 51 kann direkt mit dem Innenkontakt 50 verbunden werden und stellt ihrerseits dann den Kontakt mit einem elektrisch leitenden Objektivgehäuse her.

Figur 17 zeigt schematisch den in Figur 16 kreisförmig angezeigten Ausschnitt sowie eine Unterseitenkontaktierung 53 der in dieser Ausführungsform nun doppelseitig ausgebildeten Ringplatine 48. Bei dieser Bauweise ist also der Außenkontakt 49 auf einer Seite und der Innenkontakt 50 auf der anderen Seite der Ringplatine 48 angeordnet, was die elektrische Verbindung zwischen Hülse 51 und Ringplatine 48 erleichtert.

Zur Kontaktierung des Objektivs, das beispielsweise mit der Ringhülse 42 der Figuren 12 oder 13 ausgestattet sein kann, ist am Objektivrevolver 54 im Bereich jedes Objektivauges 55 ein Stößel 56 vorgesehen, der über einen Federkontakt 57 kontaktiert ist. Jeder Stößel 56 weist dazu an der Oberseite einen Stößelkontakt 60 auf. Der Stößel 56 mit Stößelkontakt 60 sowie ein zusätzliche Massekontaktring 61 ist in einem Objektivteller 59 des Objektivrevolvers 54 vorgesehen.

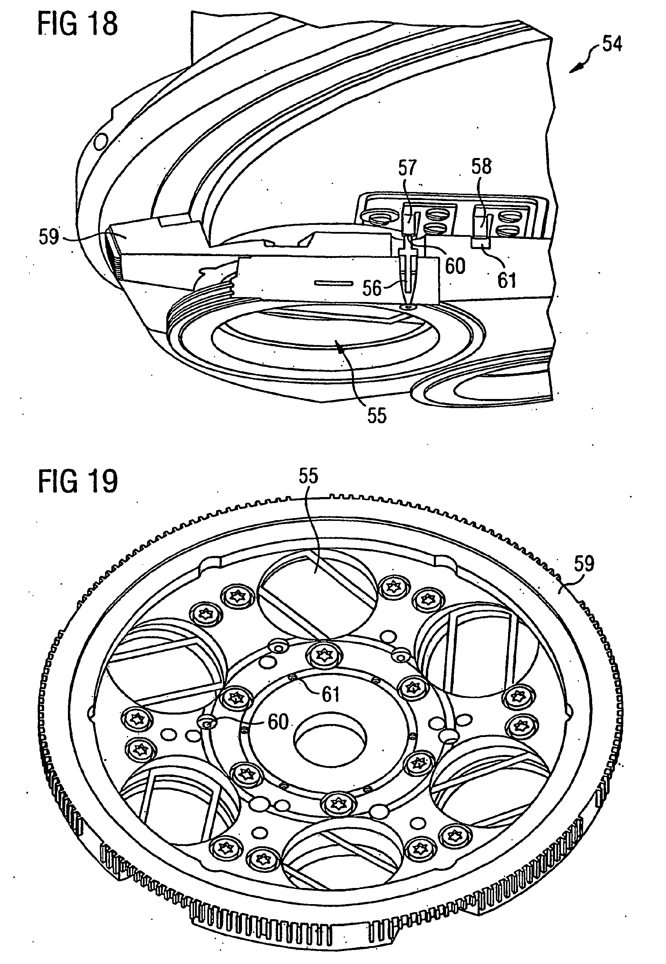

Figur 19 zeigt diesen Objektivteller 59. An jedem Objektivauge 55 liegt ein Stößel mit Stößelkontakt 60. Ein Drehen des Objektivtellers 59 bringt immer denjenigen Stößelkontakt 60 an den Federkontakt 57, der dem in dem Strahlengang geschwenkten Objektiv zugeordnet ist. Durch diese Maßnahme ist sichergestellt, daß von denjenigen Objektiv der Chip 15 ausgelesen wird, daß in gerade in den Strahlengang geschwenkt ist. Natürlich kann dies auch andersartig realisiert werden, z. B. durch Auslesen der Objektivrevolverstellung.

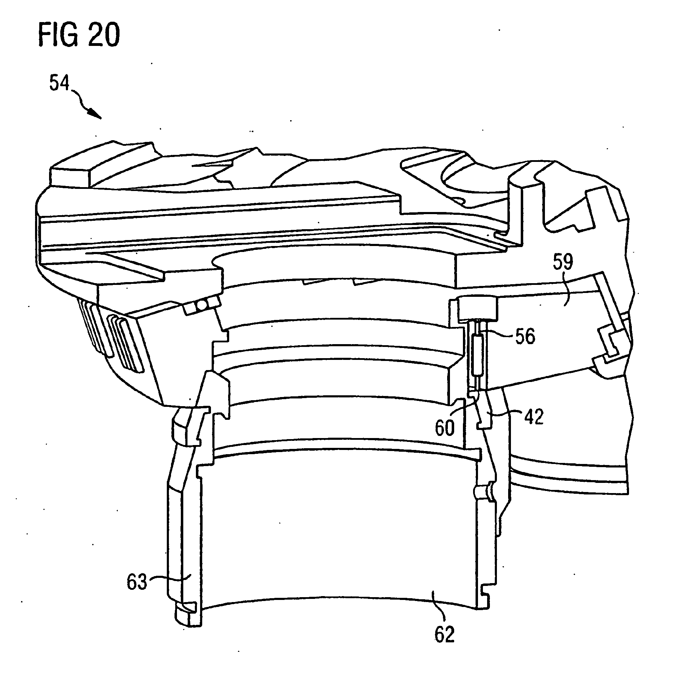

Fig. 20 zeigt eine perspektivische Schemadarstellung des Objektivrevolvers 54 mit eingesetztem Objektiv 62. Der Stößel 56 kontaktiert den an der Ringhülse 52 ausgebildeten Stößelkontakt 60. Der andere Anschluß des Chips wird über den (in Fig. 20 nicht gezeigten) Massekontakt 28 hergestellt, welcher mit einer Objektivhülle 63 des Objektivs 63 verbunden ist und seinerseits von der Ringhülse 62 auf einen der Anschlüsse des Chips 15 (in Fig. 20 nicht gezeigt) gelegt ist.

Natürlich kann man anstelle der hier lediglich beispielhaft geschilderten optischen Bauteile auch andere für den Strahlengang wirksame Elemente unter Verwendung von dort angebrachten Mikrochips 15 in der Komponentenerkennung erfassen. Beispielshalber seien genannt Strahlumlenkungen, Farbfilter oder Graufilter, Blenden, Aperturblenden, Feldblendenschieber, DIC-Schieber, TIC-Schieber, Kameras, Kondensatoren, Lichtquellen, wechselbare Revolver, TV-Ports, Tuben, Prismen, Mikrotfterplatten, Objektträger, Mikroskopkomponenten steuernde Elektronenplatinen oder auch das Mikroskopstativ.

## Patentansprüche

1. Optik-Komponente für ein Mikroskop, an der ein elektronischer Baustein (15) befestigt ist und an der zwei Kontaktfelder (16, 17; 18, 19) vorhanden sind, welche elektrisch mit Anschlüssen des Bausteins (15) verbunden sind und über welche der Baustein (15) bei in das Mikroskop eingebauter Komponente elektrisch kontaktierbar und mit Energie versorgbar ist, wobei über die zwei Kontaktfelder (16, 17; 18, 19) sowohl die Energieversorgung des Bausteins (15) als auch eine Datenkommunikation mit dem Baustein (15) erfolgt und der Baustein (15) die Komponente identifizierende Daten und vorzugsweise auch Komponenteneigenschaften beschreibende Daten enthält und wobei die Optik-Komponente als Mikroskopobjektiv ausgebildet ist, wobei an einer Objektivhülle (63) ein Ring (42, 48) befestigt ist, der den elektronischen Baustein (15) trägt, und wobei eines der zwei Kontaktfelder durch die elektrisch leitende Objektivhülle (63) gebildet ist und das andere der zwei Kontaktfelder als ringförmiger Leiterstreifen (47) ausgeführt ist.

2. Optik-Komponente nach Anspruch 1, wobei die Optik-Komponente betriebszustandabhängig im Mikroskop aktivierbar ist.

3. Komponente nach Anspruch 1 oder 2, wobei der Baustein (15) auf einer Platine (14) angebracht ist, welche die Kontaktfelder (16, 17; 18, 19) trägt und welche an der Komponente mit mindestens zwei von außen zugänglichen Kontakten (16, 17; 18, 19) befestigt ist.

4. Mikroskop mit einer Optik-Komponente nach einem der Ansprüche 1-4, einem Kontaktierungsmechanismus, der zur Kontaktierung des Objektivs ausgebildet ist und im Mikroskop (1) in den Strahlengang bringbare oder gebrachte Komponenten kontaktiert und einer Steuereinheit (4), die mit dem Kontaktierungsmechanismus (25; 56, 58) über eine Kommunikationsverbindung verbunden ist und über Abfrage der Bausteine (15) Daten über die Konfiguration des Mikroskops (1) ermittelt, wobei das Mikroskop einen Objektivrevolver (54) mit einem Objektivteller (59), in den an Objektivaugen (55) Objektive (62) einsetzbar sind, aufweist, wobei der Kontaktierungsmechanismus für jedes Objektivauge (55) ein Kontaktelement (56), das eines der zwei Kontaktfelder (18, 19) und damit einen der beiden Anschlüsse des Bausteines (15) kontaktiert, umfaßt und weiter am Objektivteller (59) einen Schleifkontakt (58) aufweist, der über die Objektivhülle (63) das andere der beiden Kontaktfelder anschließt.

5. Verfahren zur Komponentenerkennung bei einem Mikroskop, wobei Komponenten nach Anspruch 1 verwendet werden, deren Speicherbausteine (15) elektrisch kontaktiert und ausgelesen werden und aus den dabei ausgelesenen Daten die im Mikroskop (1) aktuell im Strahlengang aktiven Komponenten ermittelt werden.

## Claims

1. Optical component of a microscope which component and electronic chip (15) is mounted and which comprises two contact pads (16, 17; 18, 19) being electrically connected to terminals of the chip (15) and via which the chip (15) with the component fitted to the microscope can be electrically contacted and supplied with power, wherein power supply of the chip (15) as well as a data communication with the chip (15) is effected via the two contact pads (16, 17; 18, 19), wherein the chip (15) contains data serving to identify the component and preferably also data describing the properties of the component and wherein the optical component is provided as a microscope objective wherein a ring (42, 48) is mounted to an objective sleeve (63), which ring carries the electronic chip (15), and wherein one of the two contact pads is formed by the electrically conducting objective sleeve (63) and the other of the two contact pads is provided as a ring-shaped conductor strip (47).

2. The optical component as claimed in claim 1, wherein the optical component can be activated in the microscope depending on the operating condition.

3. The optical component as claimed in claim 1 or 2, wherein the chip (15) is mounted on a printed circuit board (14) which carries the contact pads (16, 17; 18, 19) and which is mounted to the component with at least two contracts (16, 17; 18, 19) being externally accessible.

4. A microscope comprising an optical component as claimed in any of claims 1-4 and a contact mechanism which is provided for contacting the objective and which contacts component to be moved or having been moved into the beam path of the microscope (1), wherein the microscope (1) comprises a control unit (4) connected to the contact mechanism (25; 56, 58) via a communication link and which determines data on the configuration of the microscope (1) by scanning the chips (15) and wherein the microscope comprises a revolving turret (54) including an objective plate (59) into which objective eyes (55) of objectives (62) can be inserted, wherein the contact mechanism comprises a contact element (56) for each objective eye (55), said contact element (56) comprising one of the two contact pads (18, 19) and, thus, connect to one of the two terminals (15) and wherein further the contact mechanism comprises a sliding contact (58) at the objective plate (59), which sliding contact (58) connects the other one of the two terminals of the chip (15) via the objective sleeve (63).

5. Method for component detection in a microscope, wherein components as claimed in claim 1 are used, the memory chips (15) are electrically contacted and read out and the components which are presently active in the beam path of the microscope (1) are determined from the data read out.

## Revendications

1. Composant optique pour un microscope, sur lequel est attaché un élément électronique (15) et sur lequel deux champs de contact (16, 17 ; 18, 19) sont disponibles, lesquels sont reliés électriquement avec des connexions de l'élément (15) et par lesquels l'élément (15) est en contact électrique avec les composants intégrés du microscope et par lesquels il est approvisionné en énergie, dans lequel est effectué au travers des deux champs de contact (16, 17 ; 18, 19) aussi bien l'approvisionnement en énergie de l'élément (15) que la communication de données avec l'élément (15) et dans lequel l'élément (15) contient des données d'identification du composant et de préférence aussi des données descriptives des propriétés du composant et dans lequel le composant optique est formé d'un objectif de microscope, dans lequel un anneau (42, 48) est fixé à une coque de l'objectif (63), qui porte l'élément électronique (15), et dans lequel un des deux champs de contact est constitué de l'objectif (63) conducteur électriquement, et l'autre des deux champs de contact est constitué d'une bande conductrice (47) en forme d'anneau.

2. Composant optique selon la revendication 1, dans lequel le composant optique est activable en fonction de l'état de fonctionnement dans le microscope.

3. Composant selon la revendication 1 ou 2, dans lequel l'élément (15) est monté sur une platine (14), laquelle comportant les champs de contact (16, 17 ; 18, 19), et laquelle est fixée au composant avec au moins deux contacts (16, 17 ; 18, 19) accessibles de l'extérieur.

4. Microscope avec un composant optique selon l'une des revendications 1 à 4, un mécanisme de mise en contact (25 ; 56, 58), qui est conçu pour effectuer le contact avec l'objectif et dans le microscope (1) entre en contact avec les composants amenables dans le passage du faisceau ou placés et une unité de contrôle (4), qui est reliée avec le mécanisme de mise en contact (25 ; 56, 58) par une liaison de communication et par interrogation de l'élément (15) détermine des information sur la configuration du microscope (1), dans lequel le microscope comporte un revolver d'objectifs (54) avec un plateau d'objectifs (59), dans lequel des objectifs (62) sont plaçables dans des logements d'objectifs (55), dans lequel le mécanisme de mise en contact comprend un élément de contact (56) pour chaque logement d'objectif (55), qui est en contact avec un des deux champs de contact (18, 19) et ainsi une des deux connections de l'élément (15), et en outre comporte en outre sur le plateau d'objectifs (59) un contact glissant (58), qui à travers la coque de l'objectif (63) se raccorde à l'autre des deux champs de contact.

5. Procédé d'identification de composants d'un microscope, dans lequel sont utilisés les composants selon la revendication 1, dont les éléments de mémoire (15) entrent en contact électrique et sont lus et, par les informations ainsi obtenues, les composant actifs actuellement dans le faisceau du microscope (1) sont déterminés par les informations ainsi obtenues.
